# EUROPÄISCHE PATENTSCHRIFT

(11) **EP 1 881 236 B1**
(45) Veröffentlichungstag und Bekanntmachung des Hinweises auf die Patenterteilung: **04.03.2009**
(21) Anmeldenummer: 07000958.4
(22) Anmeldetag: 18.01.2007
(51) Int. Cl.: F16H 25/22

(54) **Kugelschraubtrieb**
Ball screw drive
Entraînement par vis à billes

(30) Priorität: 18.07.2006 CH 11532006
(43) Veröffentlichungstag der Anmeldung: 23.01.2008
(73) Patentinhaber: Eichenberger Gewinde AG, 5736 Burg (CH)
(72) Erfinder: Husistein, Kurt, 5736 Burg (CH)
(74) Vertreter: Schaad, Balass, Menzl & Partner AG

(56) Entgegenhaltungen:
- DE-U1- 29 919 250
- DE-U1-2202005 010 30
- US-A1- 3 009 367

## Beschreibung

Die vorliegende Erfindung betrifft einen Kugelschraubtrieb mit einer Spindel und mit einer daran geführten Spindelmutter, sowie mit zwischen der Spindel und der Spindelmutter, zwischen deren Gewindenuten in einem Arbeitskanal geführten Kugeln, wobei die Kugeln an beiden Enden der Spindelmutter in Kugelumlenkstücken aus dem Arbeitskanal in einen in der Spindelmutter untergebrachten Rückführkanal und umgekehrt umgeleitet sind.

Aus der GB-PS-957330 ist ein Kugelschraubtrieb der eingangs erwähnten Art bekannt. Dieser Kugelschraubtrieb enthält eine Spindel und eine daran geführte Spindelmutter mit zwischen ihren Gewindenuten in einem Arbeitskanal geführten Kugeln. Sowohl die Spindelmutter als auch die Spindel weisen ein Einganggewinde auf. Um das Verhältnis des Vorschubs der Spindelmutter zur Umdrehung der Spindel zu ändern, sollte man die Steigung der Gewinden ändern. Bei grosser Steigung der Gewinden nimmt aber die Belastbarkeit des Kugeltriebs bei gleichbleibenden Länge der Spindelmutter ab, weil weniger Kugeln in die gegenüberliegenden Nuten lasttragend eingreifen können. Eine Abhilfe besteht darin, dass ein Mehrganggewinde für die Spindel und für die Spindelmutter verwendet wird. Dabei kann aber das für ein Einganggewinde vorgesehene Kugelumlenkstück nicht mehr verwendet werden.

Aus der gattungsgemäßen US-A1-3 009 367 ist ein weiterer Kugelschraubtrieb mit zwei an den beiden Enden der Spindelmutter angebrachten Kugelumlenkstücken bekannt, wobei die Kugelumlenkstücke für Mehrganggewinde aufweisende Spindel und Spindelmutter geeignet sind. Das aus einem Stück bestehende Kugelumlenkstück weist für jeden zwischen den Gewinden liegenden Arbeitskanal und für jeden zugeordneten Rückführkanal einen diese verbindenden Kugelumlaufkanal auf. Dieses Kugelumlenkstück ist kompliziert und erfordert eine kostspielige Herstellung und Montage.

Die Aufgabe der vorliegenden Erfindung ist es, einen Kugelschraubtrieb der eingangs erwähnten Art vorzuschlagen, bei welchem das Verhältnis des Vorschubs der Spindelmutter zur Umdrehung der Spindel durch ein Mehrganggewinde nach Bedarf erhöht und dabei ein einfaches, kostengünstiges und einfach montierbares Kugelumlenkstück verwendet werden kann.

Die gestellte Aufgabe ist dadurch gelöst, dass die Kugelumlenkstücke kreisringförmig sind und aus mindestens zwei identisch ausgebildeten Kreisringsektoren zusammengesetzt sind, wobei jeder Kreisringsektor einen Teil eines in Richtung der Mündung des Rückführkanals axial und am Umfang des Kugelumlenkstückes radial vorstehenden, in einer zur Spindel tangentialen Ebene geteilten Umlenkkopfes trägt wobei durch die tangentiale Ebene (9) Trennflächen der Kreisringsektoren (5,6) gebildet sind, wobei die benachbarten zusammengesetzten Kreisringsektoren im Umlenkkopf in der zur Spindel tangentialen Ebene aneinanderstossen und durch Stift-Sackloch-Verbindung zusammengehalten sind, wobei der Kugelumlaufkanal im Arbeitskanal beginnt und im Umlenkkopf unmittelbar vor der Mündung des Rückführkanals endet, und wobei der Kugelumlaufkanal teilweise in den einander zugekehrten Trennflächen der Kreisringsektoren geführt ist. Bei dieser. Anordnung kann zu jedem Rückführkanal ein - Kreisringsektor zugeordnet werden. Die identisch ausgebildeten Kreisringsektoren des Kugelumlenkstückes sind kostengünstig in der Herstellung und sind einfach montierbar. Das Einsetzen von Mehrganggewinden ist mit einem geteilten Kugelumlenkstück möglich. Dadurch kann eine verhältnismässig grosse Gewindesteigung mit Mehrganggewinden gewählt werden. Die dabei zwischen den Mehrganggewinden, in mehrfach geführten Arbeitskanälen laufenden, zahlreichen Kugeln reichen für die Aufnahme von relativ grossen mechanischen Belastungen auch aus. Die an den Enden der Spindelmutter eingesetzten, geteilten Kugelumlenkstücke ermöglichen die Kugelrückführung in die zugeordneten Rückführkanäle und umgekehrt. Das Kugelumlenkstück ist bei der Montage mit der Stift-Sackloch-Verbindung zu einem Stück vereinigt. So können alle miteinander verbundenen Kreisringsektoren als ein Stück in die Spindelmutter eingesetzt und montiert werden.

Vorteilhafterweise ist der am Umfang des Kugelumlenkstückes vorstehende Umlenkkopf in eine radial gerichtete Ausnehmung im Spindelmutterkörper eingelegt, wodurch das Umlenkstück gegen Verdrehung gesichert ist.

Das Kugelumlenkstück kann in einer ringförmigen Ausnehmung im Spindelmutterkörper durch einen Sprengring gehalten sein. Durch diese Massnahme ist eine einfache, kostengünstige Montage des Kugelumlenkstückes möglich.

Im Spindelmutterkörper ist vorteilhafterweise eine Ringnut mit nach aussen verjüngend abgeschrägten Mündung für die Aufnahme des Sprengringes vorgesehen. Durch diese Massnahme wird erreicht, dass im Betrieb die natürliche Auswärtsbewegung des Kugelumlenkstückes aufgefangen und zurückgedrängt wird.

Im folgenden werden anhand der beiliegenden Zeichnungen Ausführungsbeispiele der Erfindung näher beschrieben. Es zeigen:
- Fig.1: einen Kugelschraubtrieb mit Spindel und Spindelmutter,
- Fig.2: den Kugelschraubtrieb teilweise im Schnitt,
- Fig.3: die Explosionsdarsellung eines Kugelumlenkstückes mit der Spindelmutter
- Fig.4.: den Kugelumlenkstück in Draufsicht,
- Fig.5: einen Kreisringsektor des Kugelumlenkstückes von der Seite,
- Fig.6: von oben,
- Fig.7: von einer anderen Seite,
- Fig.8: die Sprengringbefestigung des Kugelumlenkstückes im Schnitt.

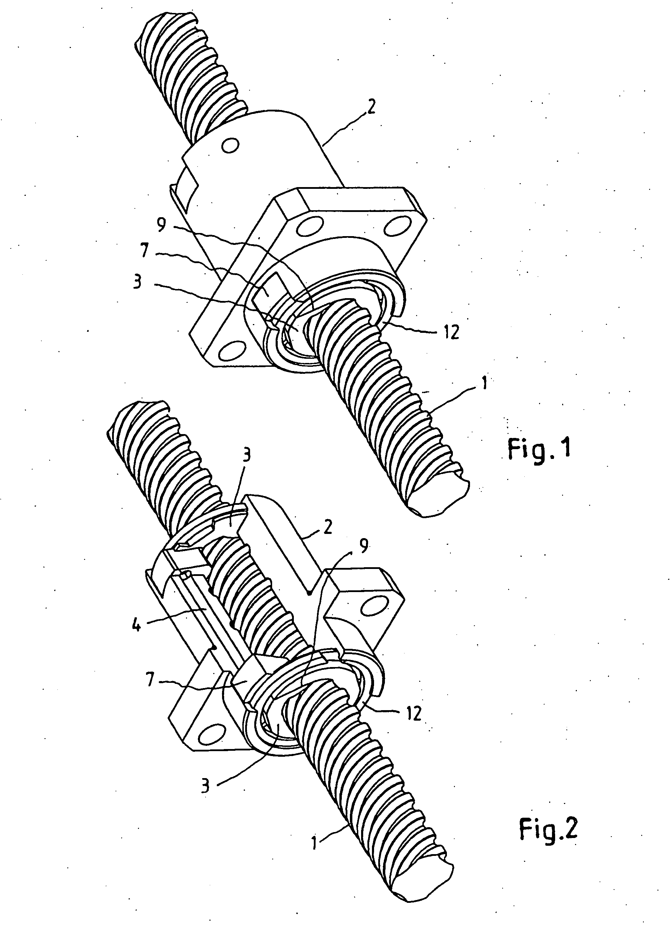

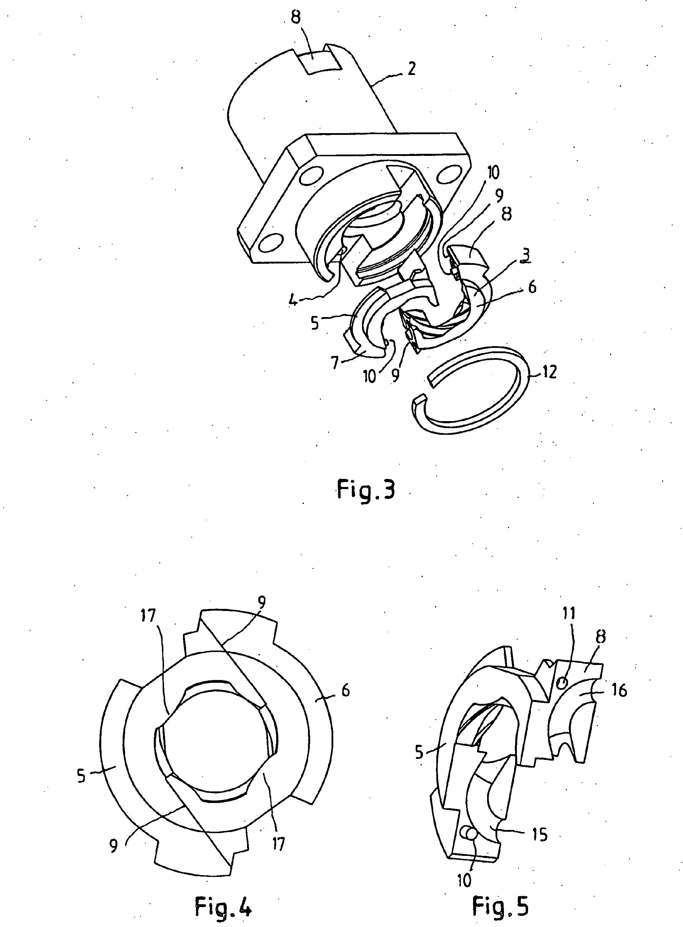

Fig.1 zeigt einen Kugelschraubtrieb mit einer Spindel 1 und mit einer daran geführten Spindelmutter 2. Zwischen den Gewindenuten der Spindel 1 und der Spindelmutter 2 entsteht ein Arbeitskanal, in welchem nicht dargestellte Kugeln geführt sind. Die Kugeln sind an beiden Enden der Spindelmutter 2 in Kugelumlenkstückes 3 aus dem Arbeitskanal in einen in der Spindelmutter 2 untergebrachten Rückführkanal 4 und umgekehrt umgeleitet. In Fig.2 ist der Kugelschraubtrieb teilweise im Schnitt dargestellt. Die Kugelumlenkstücke 3 un der Rückffführkanal 4 sind dabei gut erkennbar. Die Kugelumlenkstücke 3 sind kreisringförmig und sind aus zwei identisch ausgebildeten Kreisringsektoren 5 und 6 zusammengesetzt, wie aus Fig.3 hervorgeht. Jeder Kreisringsektor 5, 6 trägt die Hälfte eines Umlenkkopfes 7, 8, der sowohl in Richtung der Rückführkanalmündung 4 als auch am Umfang des Kugelumlenkstückes 3 aus der kreisringffförmigen Kugelumlenkstück 3 vorsteht. Der Umlenkkopf 7, 8 ist in einer zur Spindel 1 tangentialen Ebene 9 geteilt. Die benachbarten Kreisringsektoren 5, 6 stossen in dieser Ebene aneinander, wie Fig.4 es zeigt. Die benachbarten Kreisringsektoren 5, 6 sind mit Stift 10- Sackloch 11- Verbindungen zusammengehalten, wie in den Figuren 5 bis 7 ersichtlich ist. Vor der Montage des Kugelumlenkstückes 3 werden die Stifte 10 in die Sacklöcher 11 eingeführt und so das Kugelumlenkstück 3 als ein Stück in die Spindelmutter 2 eingesetzt, wo es mit einem Sprengring 12 befestigt wird.

Um das Kugelumlenkstück 3 gegen Verdrehung zu sichern, ist im Spindelmutterkörper 2 eine radiale Ausnehmung vorgesehen, in welche der Unlerikkopf 7, 8 eingelegt ist, wie in Fig.2 ersichtlich ist.

In Fig.4 sind Schmutzabstreiflappen 17 erkennbar, die in der Spindelmutter 2 integriert sind.

Die Figuren 5, 6 und 7 zeigen die Kreisringsektoren 5, von verschiedenen Seiten her gesehen. Fig.5 zeigt die Trennfläche des Kreisringsektors 5. Die Teile der Kugelumlaufkanäle 15, 16 sid gut sichtbar. Diese Teile der Kugelumlaufkanäle 15, 16 wirken nach dem Zusammenbau des kreisringförmigen Kugelumlaufstückes 3 mit den zugekehrten Teilen der Kugelumlaufkanäle 15, 16 des anstossenden Kreisringsektors 6 zusammen und ergeben einen im Arbeitskanal beginnenden und vor der Rückführkanalmündung 4 endenden Kugelumlaufkanal.

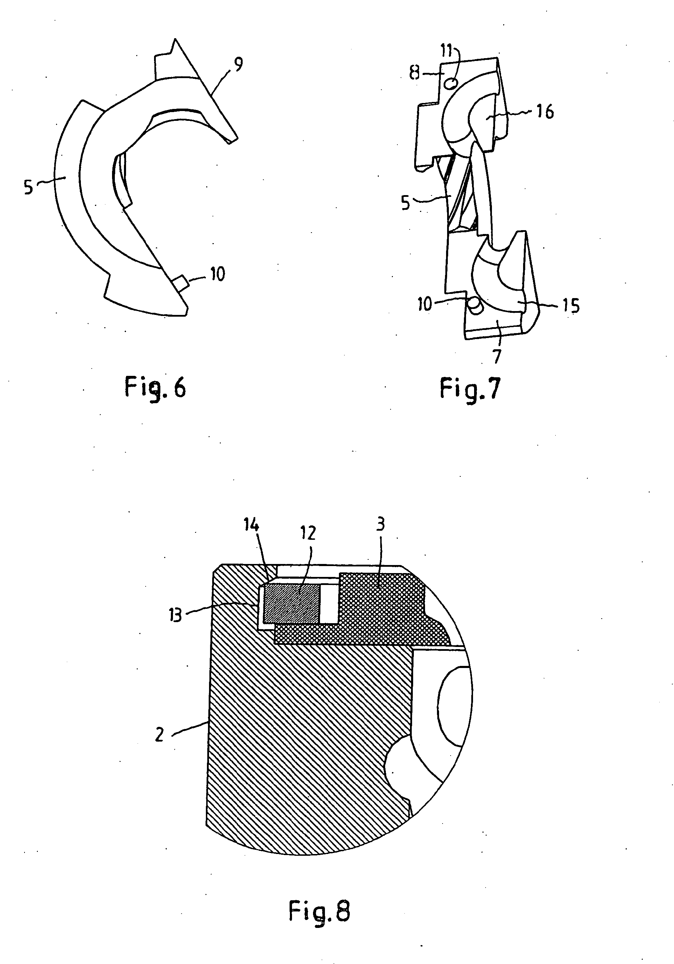

Fig.8 zeigt einen Teil der Spindelmutter 2 mit dem in eine Ringnut 13 in der Spindelmutter 2 eingesetzten Kugelumlenkstück 3 und den Sprengring 12 im Schnitt. Um eine Auswärtsbewegung des Kugelumlenkstückes 3 aus der Spindelmutter 2 im Betrieb entgegenzuwirken, ist die Mündung des Ringnutes 13 in der Spindelmutter 2 nach aussen verjüngend schräg ausgebildet. Diese Schrägfläche 14 drängt den das Kugelumlenkstück 3 haltenden Sprengrrring 12 zurück und verhindert so eine Auswärtsbewegung.

## Patentansprüche

1. Kugelschraubtrieb mit einer Spindel (1) und mit einer daran geführten Spindelmutter (2), sowie mit zwischen der Spindel (1) und der Spindelmutter (2), zwischen deren Gewindenuten in einem Arbeitskanal geführten Kugeln, wobei die Kugeln an beiden Enden der Spindelmutter (2) in Kugelumlenkstücken (3) aus dem Arbeitskanal in einen in der Spindelmutter (2) untergebrachten Rückführkanal (4) und umgekehrt umgeleitet sind, **dadurch gekennzeichnet, dass** die Kugelumlenkstücke (3) kreisringförmig sind und aus mindestens zwei identisch ausgebildeten Kreisringsektoren (5, 6) zusammengesetzt sind, wobei jeder Kreisringsektor (5, 6) einen Teil eines in Richtung der Mündung des Rückführkanals (4) axial und am Umfang des Kugelumlenkstückes (3) radial vorstehenden, in einer zur Spindel (1) tangentialen Ebene (9) geteilten Umlenkkopfes (7, 8) trägt wobei durch die tangentiale Ebene (9) Trennflächen der Kreisringsektoren (5, 6) gebildet sind, wobei die benachbarten zusammengesetzten Kreisringsektoren (5, 6) im Umlenkkopf (7, 8) in der zur Spindel (1) tangentialen Ebene (9) aneinanderstossen und durch Stift-Sackloch-Verbindung (10, 11) zusammengehalten sind, wobei der Kugelumlaufkanal (15, 16) im Arbeitskanal beginnt und im Umlenkkopf (7, 8) unmittelbar vor der Mündung des Rückführkanals (4) endet, und wobei der Kugelumlaufkanal (15, 16) teilsweise in den einander zugekehrten Trennflächen (9) der Kreisringsektoren (5, 6) geführt ist.

2. Kugelschraubtrieb nach Anspruch 1, **dadurch gekennzeichnet, dass** der am Umfang des Kugelumlenkstückes (3) radial vorstehende Umlenkkopf (7, 8) in eine radial gerichtete Ausnehmung im Spindelmutterkörper (2) eingelegt ist, wodurch das Kugelumlenkstück (3) gegen Verdrehung gesichert ist.

3. Kugelschraubtrieb nach Anspruch 1, **dadurch gekennzeichnet, dass** das Kugelumlenkstück (3) in einer ringförmigen Ausnehmung (13) im Spindelmutterkörper (2) durch einen Sprengring (12) gehalten ist.

4. Kugelschraubtrieb nach Anspruch 3, **dadurch gekennzeichnet, dass** im Spindelmutterkörper (2) eine Ringnut (13) mit nach aussen verjüngend abgeschrägten Mündung (14) für die Aufnahme des Sprengringes (12) vorgesehen ist.

## Claims

1. Ballscrew mechanism with a spindle (1) and with a spindle nut (2) guided on the latter and also with balls guided between the spindle (1) and the spindle nut (2) between their thread grooves in a working duct, at the two ends of the spindle nut (2) the balls being diverted in ball deflection pieces (3) out of the working duct into a return duct (4) accommodated in the spindle nut (2) and vice versa, **characterized in that** the ball deflection pieces (3) are annular and are composed of at least two identically formed annulus sectors (5, 6), each annulus sector (5, 6) carrying part of a deflection head (7, 8) projecting axially in the direction of the issue of the return duct (4) and radially on the circumference of the ball deflection piece (3) and split in a plane (9) tangential to the spindle (1), parting planes of the annulus sectors (5, 6) being formed by the tangential plane (9), the adjacent assembled annulus sectors (5, 6) in the deflection head (7, 8) butting one against the other in the plane (9) tangential to the spindle (1) and being held together by means of a pin/blank-hole connection (10, 11), the ball circulation duct (15, 16) starting in the working duct and ending in the deflection head (7, 8) directly in front of the issue of the return duct (4), and the ball circulation duct (15, 16) being guided partially in the mutually confronting parting planes (9) of the annulus sectors (5, 6).

2. Ballscrew mechanism according to Claim 1, **characterized in that** the deflection head (7, 8) projecting radially on the circumference of the ball deflection piece (3) is inserted into a radially directed recess in the spindle-nut body (2), with the result that the ball deflection piece (3) is secured against twisting.

3. Ballscrew mechanism according to Claim 1, **characterized in that** the ball deflection piece (3) is held in an annular recess (13) in the spindle-nut body (2) by means of a spring ring (12).

4. Ballscrew mechanism according to Claim 3, **characterized in that** an annular groove (13) with an outwardly taperingly sloped issue (14) for receiving the spring ring (12) is provided in the spindle-nut body (2).

## Revendications

1. Entraînement par vis à bille comprenant une broche (1) et un écrou de broche (2) guidé sur elle, ainsi que des billes guidées dans un canal de travail entre la broche (1) et l'écrou de broche (2) entre les rainures de filetage, les billes étant conduites aux deux extrémités de l'écrou de broche (2) dans des pièces de déviation de billes (3) hors du canal de travail dans un canal de retour (4) pratiqué dans l'écrou de broche (2), et inversement, **caractérisé en ce que** les pièces de déviation de billes (3) sont de forme annulaire circulaire et se composent d'au moins deux secteurs d'anneau circulaire (5, 6) identiques, chaque secteur d'anneau circulaire (5, 6) portant une partie d'une tête de déviation (7, 8) divisée dans un plan (9) tangentiel à la broche (1) et saillant axialement dans la direction de l'embouchure du canal de retour (4) et radialement à la périphérie de la pièce de déviation de billes (3), des surfaces de séparation des secteurs d'anneau circulaire (5, 6) étant formées par le plan (9) tangentiel, les secteurs d'anneau circulaire (5, 6) assemblés adjacents aboutant les uns contre les autres dans la tête de déviation (7, 8) dans le plan (9) tangentiel à la broche (1), et étant maintenus ensemble par une connexion par goupille et trou borgne (10, 11), le canal de circulation des billes (15, 16) commençant dans le canal de travail et se terminant dans la tête de déviation (7, 8) immédiatement avant l'embouchure du canal de retour (4), et le canal de circulation des billes (15, 16) étant guidé en partie dans les surfaces de séparation (9) tournées l'une vers l'autre des secteurs d'anneau circulaire (5, 6).

2. Entraînement par vis à bille selon la revendication 1, **caractérisé en ce que** la tête de déviation (7, 8) saillant radialement à la périphérie de la pièce de déviation de billes (3) est introduite dans un évidement orienté radialement dans le corps d'écrou de broche (2), de sorte que la pièce de déviation de billes (3) soit fixée contre toute rotation.

3. Entraînement par vis à bille selon la revendication 1, **caractérisé en ce que** la pièce de déviation de billes (3) est maintenue dans un évidement annulaire (13) dans le corps d'écrou de broche (2) par un jonc (12).

4. Entraînement par vis à bille selon la revendication 3, **caractérisé en ce que** l'on prévoit dans le corps d'écrou de broche (2) une rainure annulaire (13) avec une embouchure (14) biseautée en se rétrécissant vers l'extérieur, pour recevoir le jonc (12).
